(19)

Europäisches
Patentamt
European
Patent Office
Office européen
des brevets

(11) **EP 4 282 724 A1**

(12) **EUROPEAN PATENT APPLICATION**
published in accordance with Art. 153(4) EPC

(43) Date of publication:
**29.11.2023 Bulletin 2023/48**

(21) Application number: **21920649.7**

(22) Date of filing: **13.10.2021**

(51) International Patent Classification (IPC):
***B60W 30/16*** (2020.01)

(86) International application number:
**PCT/CN2021/123653**

(87) International publication number:
**WO 2022/156271 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.01.2021 CN 202110088615**

(71) Applicant: **Beijing Co Wheels Technology Co., Ltd
Beijing 101300 (CN)**

(72) Inventor: **ZHAO, Baoqiang
Beijing 101300 (CN)**

(74) Representative: **advotec.
Patent- und Rechtsanwaltspartnerschaft
Tappe mbB
Widenmayerstraße 4
80538 München (DE)**

(54) **METHOD AND APPARATUS FOR CONTROLLING VEHICLE FOLLOWING AND STOPPING, AND VEHICLE**

(57)     Provided are a method and apparatus for controlling vehicle following and stopping, and a vehicle. The method comprises: in a first deceleration stage, controlling a vehicle to decelerate at a first acceleration, and gradually decreasing the absolute value of the first acceleration, the change rate of the first acceleration being smaller than a preset change rate threshold value, till the first acceleration of the vehicle decreases to a first preset value, the speed of the vehicle being equal to a second preset value; and in a second deceleration stage, controlling the vehicle to decelerate at a second acceleration till the vehicle stops, the second acceleration being equal to the first preset value. The technical solution provided above can achieve the purpose of precisely controlling a parking distance.

in a first deceleration stage, controlling a vehicle to decelerate based on a first acceleration with an absolute value of the first acceleration gradually decreasing, and a change rate of the first acceleration being less than a preset change rate threshold value, until the first acceleration of the vehicle decreases to a first preset value, and a velocity of the vehicle is equal to a second preset value ⟩ S110

in a second deceleration stage, controlling the vehicle to decelerate based on a second acceleration, until the vehicle stops, wherein the second acceleration is equal to the first preset value ⟩ S120

FIG. 1

EP 4 282 724 A1

**Description**

**CROSS-REFERENCE TO RELATED APPLICATIONS**

This application is based on and claims priority to Chinese Patent Application No. 202110088615.4, filed on January 22, 2021, the entire contents of which are incorporated herein by reference.

**TECHNICAL FIELD**

The present disclosure relates to a field of vehicle control technologies, and particularly to a method and an apparatus for controlling stop and go of a vehicle, and a vehicle.

**BACKGROUND**

At present, most autonomous vehicles are difficult to achieve stable and comfortable braking when following a stationary vehicle, which is resulted by that an existing method for controlling stop and go includes two stages, both of which are moving in uniform deceleration motion. Specifically, when a front vehicle detected is the stationary vehicle, a first stage is entered, in which case, an absolute value of an acceleration is small, and deceleration is slow. When detecting that a distance between the vehicle and the front vehicle is less than a preset value, the vehicle is switched from the first stage to a second stage, in which case, the absolute value of the acceleration is large, and deceleration is fast. The method has poor stop-and-go comfort due to an abrupt sudden change of the acceleration in a process of switching from the first stage to the second stage.

**SUMMARY**

In order to solve the above technical problem or at least partially solve the above technical problem, a method and an apparatus for controlling stop and go of a vehicle, and a vehicle are provided in the disclosure.

According to a first aspect, a method for controlling stop and go of a vehicle is provided, and includes:

in a first deceleration stage, controlling a vehicle to decelerate based on a first acceleration with an absolute value of the first acceleration gradually decreasing, and a change rate of the first acceleration being less than a preset change rate threshold value, until the first acceleration of the vehicle decreases to a first preset value, and a velocity of the vehicle is equal to a second preset value; and

in a second deceleration stage, controlling the vehicle to decelerate based on a second acceleration, until the vehicle stops, in which the second acceleration is equal to the first preset value.

Further, in the first deceleration stage, controlling the vehicle to decelerate based on the first acceleration, includes:

acquiring the velocity of the vehicle and a distance between the vehicle and a front vehicle at a preset time interval;

determining the first acceleration based on the velocity of the vehicle and the distance between the vehicle and the front vehicle; and

controlling the vehicle to travel based on the first acceleration.

Further, determining the first acceleration based on the velocity of the vehicle and the distance between the vehicle and the front vehicle includes:

determining a second acceleration based on the velocity of the vehicle and the distance between the vehicle and the front vehicle; and

determining the first acceleration based on the second acceleration and a preset acceleration value range.

Further, determining the second acceleration based on the velocity of the vehicle and the distance between the vehicle and the front vehicle includes:

determining the second acceleration based on the velocity of the vehicle, the distance between the vehicle and the front vehicle and a variable accelerated motion law with an acceleration change rate as a fixed value.

Further, determining the second acceleration based on the velocity of the vehicle, the distance between the vehicle and the front vehicle and the variable accelerated motion law with the acceleration change rate as the fixed value includes:

determining the second acceleration $a_{desire2}$ based on the velocity of the vehicle, the distance between the vehicle and the front vehicle and an equation

$$a_{desire2} = -a_{final} - \frac{\Delta V}{3D_{brake}}\left(3V_{fianl} + \Delta V + \sqrt{\left(3V_{fianl} + \Delta V\right)^2 - 6D_{brake}a_{final}}\right)$$

where,

$$D_{brake} = D_{ego} - D_{stop} - D_{final}$$

$$\Delta V = V_{ego} - V_{fianl}$$

$a_{final}$ is the first preset value, $V_{ego}$ is the velocity of the vehicle, $V_{fianl}$ is the second preset value, $D_{ego}$ is the distance between the vehicle and the front vehicle, $D_{stop}$ is a desired stop-and-go distance, and $D_{final}$ is a distance to be traveled by the vehicle in the second deceleration stage.

Further, determining the first acceleration based on the second acceleration and the preset acceleration value range includes:

determining the first acceleration $a_{desire1}$ based on the second acceleration and an equation

$$a_{desire1} = \max(a_{min}, \min(a_{max}, a_{desire2}))$$

where, $a_{max}$ is a maximum acceleration limit value, and $a_{min}$ is a minimum acceleration limit value.

Further, $a_{min}$ is determined based on an equation:

$$a_{min} = \frac{V_{fianl}{}^2 - V_{ego}{}^2}{2D_{brake}} - A$$

where, A is a constant; and
$a_{max}$ is less than or equal to a first preset acceleration.

Further, the vehicle performs the method for controlling stop and go of the vehicle in response to satisfying at least one of
the velocity of the vehicle being less than a third preset value, and the distance between the vehicle and the front vehicle being greater than a fourth preset value.
According to a second aspect, an apparatus for controlling stop and go of a vehicle is further provided, and includes:

a first deceleration module, configured to, in a first deceleration stage, control a vehicle to decelerate based on a first acceleration with an absolute value of the first acceleration gradually decreasing, and a change rate of the first acceleration being less than a preset change rate threshold value, until the first acceleration of the vehicle decreases to a first preset value, and a velocity of the vehicle is equal to a second preset value; and
a second deceleration module, configured to, in a second deceleration stage, control the vehicle to decelerate based on a second acceleration, until the vehicle stops, in which the second acceleration is equal to the first preset value.

Further, the first deceleration module includes a data acquiring unit, a first acceleration determining unit and a first control unit;

in which, the data acquiring unit is configured to acquire the velocity of the vehicle and a distance between the vehicle and a front vehicle at a preset time interval;
the first acceleration determining unit is configured to determine the first acceleration based on the velocity of the vehicle and the distance between the vehicle and the front vehicle; and
the first control unit is configured to control the vehicle to travel based on the first acceleration.

Further, the first acceleration determining unit includes a second acceleration determining subunit and a first acceleration determining subunit;

in which, the second acceleration determining subunit is configured to determine a second acceleration based on the velocity of the vehicle and the distance between the vehicle and the front vehicle; and
the first acceleration determining subunit is configured to determine the first acceleration based on the second acceleration and a preset acceleration value range.

Further, the second acceleration determining unit is specifically configured to:
determine a second acceleration based on the velocity of the vehicle, the distance between the vehicle and the front vehicle and a variable accelerated motion law with an acceleration change rate as a fixed value.

Further, the second acceleration determining unit is specifically configured to:

determine the second acceleration $a_{desire2}$ based on the velocity of the vehicle, the distance between the vehicle and the front vehicle and an equation

$$a_{desire2} = -a_{final} - \frac{\Delta V}{3D_{brake}}\left(3V_{fianl} + \Delta V + \sqrt{\left(3V_{fianl} + \Delta V\right)^2 - 6D_{brake}a_{final}}\right)$$

where,

$$D_{brake} = D_{ego} - D_{stop} - D_{final}$$

$$\Delta V = V_{ego} - V_{fianl}$$

$a_{final}$ is the first preset value, $V_{ego}$ is the velocity of the vehicle, $V_{fianl}$ is the second preset value, $D_{ego}$ is the distance between the vehicle and the front vehicle, $D_{stop}$ is a desired stop-and-go distance, and $D_{final}$ is a distance to be traveled by the vehicle in the second deceleration stage.

Further, the first acceleration determining subunit is specifically configured to:

determine the first acceleration $a_{desire1}$ based on the second acceleration and an equation

$$a_{desire1} = \max(a_{min}, \min(a_{max}, a_{desire2}))$$

where, $a_{max}$ is a maximum acceleration limit value, and $a_{min}$ is a minimum acceleration limit value.

According to a third aspect, a vehicle is further provided in the disclosure, and includes a processor and a memory;
in which, the processor is configured to perform steps of the above any method by calling a program or an instruction stored in the memory.

The technical solution according to embodiments of the present disclosure has the following beneficial effect compared with the related art.

In the technical solution provided in embodiments of the present disclosure, in an entire first deceleration stage, the change rate of the first acceleration is less than the preset change rate threshold value. And the second deceleration stage is decelerated based on an acceleration value at an end time point of the first deceleration stage. There is no abrupt change in acceleration during two deceleration stages and at a junction of two deceleration stages, which may improve comfort in an entire stop-and-go process.

Precise control of a parking distance requires that the desired parking distance is a fixed value at the end time point of the first deceleration stage, which requires that the distance to be traveled by the vehicle in the second deceleration stage is a fixed value. Since one purpose of vehicle control in the first deceleration stage in the technical solution of the present disclosure is that, at the end time point of the first deceleration stage, the second acceleration of the vehicle is equal to the first preset value, and the velocity of the vehicle is equal to the second preset value, which may ensure that the distance to be traveled by the vehicle in the second deceleration stage is a fixed value. Therefore, the technical solution provided in embodiments of the present disclosure may achieve a purpose of precise control of the parking distance.

## BRIEF DESCRIPTION OF THE DRAWINGS

The drawings herein are incorporated into the specification and constitute a part of the specification, show embodiments in conformity with embodiments of the present disclosure, and explain the principle of the present disclosure together with the specification.

In order to explain the technical solutions in embodiments of the present disclosure or in the related art more clearly, the drawings described in the embodiments or the related art will be briefly introduced below. Obviously, those skilled in the art may obtain other drawings based on the drawings without any creative work.

FIG. 1 is a flowchart illustrating a method for controlling stop and go of a vehicle provided in an embodiment of the present disclosure;

FIG. 2 is a schematic diagram illustrating a principle of controlling stop and go of a vehicle provided in an embodiment of the present disclosure;

FIG. 3 is a schematic diagram illustrating a relation of an acceleration a changing with time T in a process of controlling stop and go of a vehicle provided in an embodiment of the present disclosure;

FIG. 4 is a flowchart illustrating a method configured to implement S 110 provided in an embodiment of the present disclosure;

FIG. 5 is a flowchart illustrating a method configured to implement S 111 provided in an embodiment of the present disclosure;

FIG. 6 is a schematic diagram illustrating a relation of acceleration a changing with time T in a variable accelerated motion with an acceleration change rate as a fixed value provided in an embodiment of the present disclosure;

FIG. 7 is a schematic diagram illustrating a relation of velocity V changing with time T in a variable accelerated motion with an acceleration change rate as a fixed value provided in an embodiment of the present disclosure;

FIG. 8 is a schematic diagram illustrating a structure of an apparatus for controlling stop and go of a vehicle provided in an embodiment of the present disclosure;

FIG. 9 is a schematic diagram illustrating a structure of a hardware of a vehicle provided in an embodiment of the present disclosure.

## DETAILED DESCRIPTION

In order to understand the above purpose, features and advantages of the present disclosure more clearly, embodiments of the present disclosure may be further described below. It should be noted that, embodiments of the present disclosure may be combined with features in the embodiments without conflict.

Numerous specific details are set forth in the following description to facilitate a thorough understanding of the present disclosure. However, the present disclosure may also be implemented in other different ways than those described herein; obviously, embodiments in the specification are only a part of embodiments of the present disclosure rather than all embodiments.

For ease of understanding, the following concepts are interpreted.

Vehicle stop and go control may refer to controlling a vehicle to decelerate until the vehicle stops when the vehicle (that is, a subject for executing a method for controlling stop and go of a vehicle provided in the present disclosure, or may be understood as a vehicle to be controlled) and a front vehicle are located in a same lane and the front vehicle stops, to prevent two vehicles from colliding.

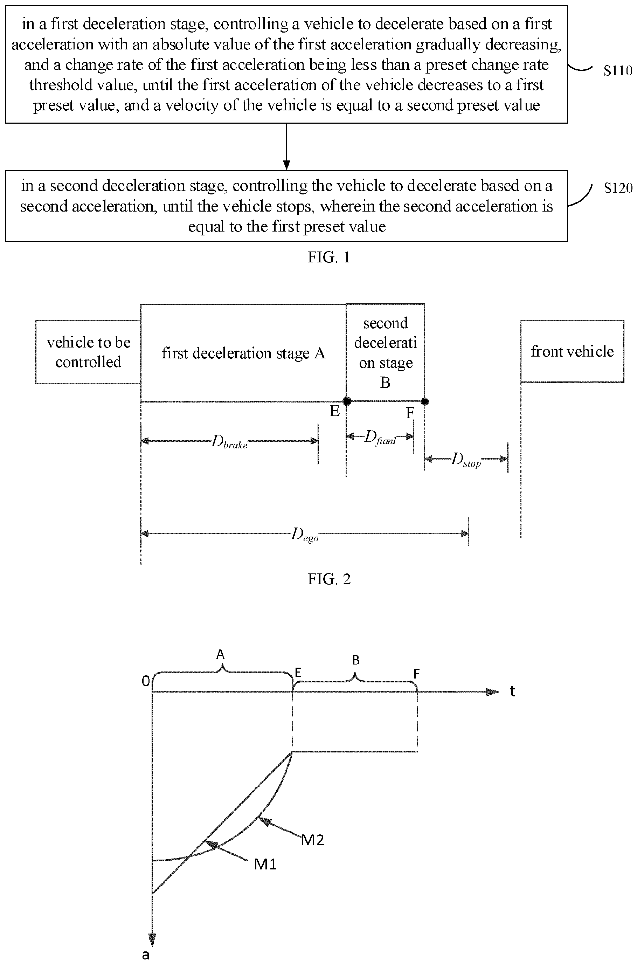

FIG. 1 is a flowchart illustrating a method for controlling stop and go of a vehicle provided in an embodiment of the present disclosure. The method is executed by a vehicle. Specifically, the method may be applied to an autonomous driving process of an unmanned vehicle, and may be applied to an adaptive cruise mode of an ordinary vehicle. Referring to FIG. 1, the method includes the following blocks.

At block S 110, in a first deceleration stage, a vehicle is controlled to decelerate based on a first acceleration with an absolute value of the first acceleration gradually decreasing, and a change rate of the first acceleration being less than a preset change rate threshold value, until the first acceleration of the vehicle decreases to a first preset value, and a velocity of the vehicle is equal to a second preset value.

At block S 120, in a second deceleration stage, the vehicle is controlled to decelerate based on a second acceleration, until the vehicle stops. The second acceleration is equal to the first preset value.

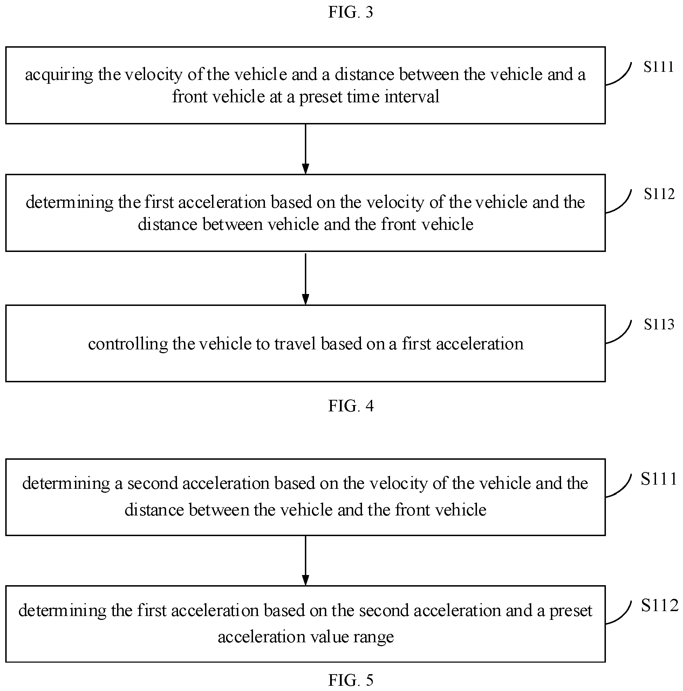

FIG. 2 is a schematic diagram illustrating a principle of controlling stop and go of a vehicle provided in an embodiment of the present disclosure. FIG. 3 is a schematic diagram illustrating a relation of an acceleration a changing with time T in a process of controlling stop and go of a vehicle provided in an embodiment of the present disclosure. In FIG. 3, in the first deceleration stage, two curves (a curve M1 and a curve M2) are illustratively shown, and correspond to two brake modes. Referring to FIG. 2 and FIG. 3, in the foregoing technical solution, an entire deceleration process is substantially divided into two stages, i.e., a first deceleration stage A and a second deceleration stage B.

In the first deceleration stage A, it is required to control the vehicle to perform a deceleration motion with variable acceleration. Specifically, in the first deceleration stage A, it is required to control an absolute value of an acceleration of the vehicle to gradually decrease, and the velocity of the vehicle to gradually decrease, until reaching an E point. The E point is an end time point of the first deceleration stage A, and is a beginning time point of the second deceleration stage B. At the E point, it is required to control the acceleration of the vehicle to be the first preset value, and the velocity to be second preset value. And in the entire first deceleration stage A, the change rate of the first acceleration is less than the preset change rate threshold value. A specific value of the change rate threshold value is not limited in the disclosure. When actually setting the change rate threshold value, it is required to consider whether a set change rate threshold value may ensure that the acceleration transitions smoothly without abrupt change throughout the entire deceleration process of the vehicle in the first stage, satisfying a comfort requirement in a deceleration process.

In the second deceleration stage B, it is required to control the vehicle to perform a uniformly deceleration motion. Specifically, in the second deceleration stage B, it is required to control the absolute value of the acceleration of the vehicle to be constant, and equal to the first preset value. it is required to control the velocity of the vehicle to gradually decrease until reaching 0.

In the above technical solution, in the entire first deceleration stage A, the change rate of the first acceleration is less than the preset change rate threshold value. And in the second deceleration stage B, deceleration is performed based on the acceleration value at the end time point of the first deceleration stage A. There is no abrupt change of acceleration during two deceleration stages and at a junction of two deceleration stages, which may improve comfort in an entire stop-and-go process.

Continuing referring to FIG. 2, in practice, in order to ensure safety of the vehicle, it is required to determine a desired stop-and-go distance $D_{stop}$. The desired stop-and-go distance $D_{stop}$ refers to a distance between the vehicle and the front vehicle when the vehicle completely stops, that is, a distance between an end point F in the second deceleration stage B and the front vehicle. Precise control of a parking distance requires the desired stop-and-go distance $D_{stop}$ to be a fixed value.

In the second deceleration stage B, since it is required to control the vehicle to perform the uniformly deceleration motion, and an initial acceleration (that is, a first preset value) and an initial velocity (that is, a second preset value) of the vehicle are fixed values, a distance to be traveled by the vehicle in the second deceleration stage B is a fixed value.

The problem of precise control of the parking distance may be transformed that it required to ensure that, at the end time point of the first deceleration stage, the second acceleration of the vehicle is equal to the first preset value, and the velocity of the vehicle is equal to a second preset value.

Since one purpose of vehicle control in the first deceleration stage is that, at the end time point of the first deceleration stage A, the second acceleration of the vehicle is equal to the first preset value, and the velocity of the vehicle is equal to a second preset value. Therefore, the technical solution provided in embodiments of the present disclosure may achieve precise control of the parking distance.

In summary, the above technical solution may achieve smooth and comfortable braking and precise control of the parking distance.

On the basis of the above technical solution, there are various methods for implementing S110, which will not be limited in the disclosure. FIG. 4 is a flowchart illustrating a method configured to implement S110 provided in an embodiment of the present disclosure. Referring to FIG. 4, the method includes the following block.

At S111, the velocity of the vehicle and a distance between the vehicle and a front vehicle are acquired at a preset time interval.

There are a plurality of methods for acquiring the velocity of the vehicle. For example, a velocity of the vehicle displayed in a vehicle instrument panel may be directly used as the velocity of the vehicle. Alternatively, a rotating speed of a vehicle tire is acquired, and the velocity of the vehicle is determined based on the rotating speed of the vehicle tire and a diameter of the tire.

There are a plurality of methods for acquiring the distance between the vehicle and the front vehicle. For example, the distance between the vehicle and the front vehicle may be acquired by means of at least one of a laser range finder, an ultrasonic range finder, a microwave radar, an infrared range finder, and a visual range finder mounted on the vehicle.

At S112, the first acceleration is determined based on the velocity of the vehicle and the distance between the vehicle and the front vehicle.

There are a plurality of methods of implementing the step. Illustratively, a corresponding relationship between the velocity of the vehicle, the distance between the vehicle and the front vehicle, and the first acceleration may be pre-established. When the step is executed, the first acceleration may be determined based on the velocity of the vehicle, the distance between the vehicle and the front vehicle, and the corresponding relationship.

The corresponding relationship between the velocity of the vehicle, the distance between the vehicle and the front vehicle, and the first acceleration may be presented in the form of a corresponding relationship table, or may be presented in a function equation.

For example, the corresponding relationship between the velocity of the vehicle, the distance between the vehicle and the front vehicle and the first acceleration is illustrated in Table 1. In Table 1, in the same row, there is a corresponding relationship between the velocity of the vehicle, the distance between the vehicle and the front vehicle, and the first acceleration.

Table 1

| Velocity of Vehicle | Distance between Vehicle and Front Vehicle | First Acceleration |
|---|---|---|
| V1 | D1 | a1 |
| V2 | D2 | a2 |
| ...... | ...... | ...... |
| Vn | Dn | an |

For example, when the corresponding relationship between the velocity of the vehicle, the distance between the vehicle and the front vehicle, and the first acceleration is presented in a function equation. The function equation may be obtained by multiple tests in combination with data fitting, or may be determined based on a kinematics principle. For example, the function equation may be determined based on the variable accelerated motion law with the acceleration change rate as the fixed value. In this case, the step may be replaced with: determining the first acceleration based on the velocity of the vehicle, the distance between the vehicle and the front vehicle, and the variable accelerated motion law with the acceleration change rate as the fixed value.

At S 113, the vehicle is controlled to travel based on a first acceleration.

The foregoing technical solution is essentially setting an acquisition interval. Illustratively, the velocity of the vehicle and the distance between the vehicle and the front vehicle are respectively acquired once every other 1 minute, for example, acquisition time points are respectively t1, t2, t3, ..., and so on. A first acceleration at a t1 time point is determined based on the velocity of the vehicle and the distance between the vehicle and the front vehicle both acquired at the t1 time point, and the vehicle is controlled to travel based on the first acceleration determined at the t1 time point, until a t2 time point is reached. A first acceleration at the t2 time point is determined based on the velocity of the vehicle and the distance between the vehicle and the front vehicle both acquired at the t2 time point, and the vehicle is controlled to travel based on the first acceleration determined at the t2 time point, until a t3 time point is reached. A first acceleration at the t3 time point is determined based on the velocity of the vehicle and the distance between the vehicle and the front vehicle both acquired at the t3 time point, and the vehicle is controlled to travel based on the first acceleration determined at the t3 time point, until a t4 time point is reached, and so on.

In the above technical solution, the first acceleration may be dynamically and cyclically adjusted based on the velocity of the vehicle and the distance between the vehicle and the front vehicle. In this way, in an entire first deceleration stage, the acceleration and the velocity of the vehicle are within a controllable range, to ensure that, at the end time point of the first deceleration stage, the first acceleration of the vehicle is equal to the first preset value and the velocity of the vehicle is equal to the second preset value, and thus smooth and comfortable braking and precise control of the parking distance both may be promoted to achieve.

FIG. 5 is a flowchart illustrating a method configured to implement S111 provided in an embodiment of the present disclosure. Alternatively, on the basis of the above technical solution, S111 in FIG. 4 may be replaced with the following steps:

At S1111, a second acceleration is determined based on the velocity of the vehicle and the distance between the vehicle and the front vehicle.
At S1112, the first acceleration is determined based on the second acceleration and a preset acceleration value range.

The configuration is essentially correcting the second acceleration by using the preset acceleration value range to form the first acceleration. Those skilled in the art may understand that there may a plurality of possible motion states before the vehicle enters the first deceleration stage. For example, the vehicle may be in a uniform rectilinear motion state, in which case, an acceleration is 0. And the absolute value of the acceleration of the vehicle gradually decreases at the first deceleration stage, the acceleration of the vehicle maintains unchanged at the second deceleration stage. In an entire vehicle stop-and-go process, an acceleration at a beginning time point of the first deceleration stage is maximum. In a case that the vehicle directly enters the first deceleration stage from the rectilinear linear motion state, the acceleration of the vehicle may change abruptly at a time point of entering the first deceleration stage, so that the vehicle has worse comfort. The first acceleration is determined by setting the second acceleration and the preset acceleration value range, which essentially corrects the obtained second acceleration by using the preset acceleration value range, reduces a variation in accelerations of the vehicle before and after the initial time point of the first deceleration stage, and further improves the comfort in a vehicle braking process, and achieves smooth and comfortable braking in a whole process.

Alternatively, S1111 may be replaced with: determining the second acceleration based on the velocity of the vehicle, the distance between vehicle and the front vehicle and a variable accelerated motion law with an acceleration change rate as a fixed value.

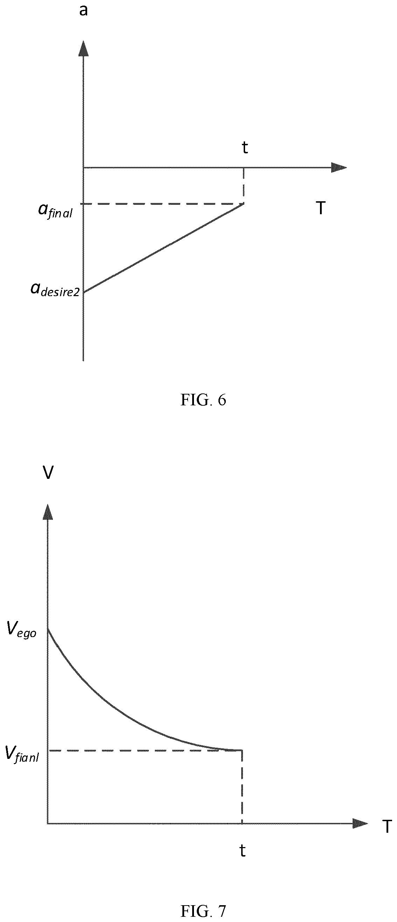

FIG. 6 is a schematic diagram illustrating a relation of an acceleration a changing with time T in a variable accelerated motion with an acceleration change rate as a fixed value provided in an embodiment of the present disclosure. FIG. 7 is a schematic diagram illustrating a relation of velocity V changing with time T in a variable accelerated motion with an acceleration change rate as a fixed value provided in an embodiment of the present disclosure. Assuming that a time parameter corresponding to a certain time point in the first deceleration stage is 0, the first deceleration stage ends and the second deceleration stage starts at a t time point. Referring to FIGs. 2, 6 and 7, assuming that $a_{final}$ is the first preset value, $V_{ego}$ is the velocity of the vehicle, $V_{fianl}$ is the second preset value, $D_{ego}$ is the distance between the vehicle and the front vehicle, $D_{stop}$ is a desired stop-and-go distance, and $D_{final}$ is a distance to be traveled by the vehicle in the second deceleration stage, $a_{desire2}$ is a second acceleration, and $k$ is a change rate of the first acceleration.

Since the first acceleration variable is a fixed value, referring to FIG. 6, equations are given by:

$$a_{desire2} = a_{final} + kt \qquad (1)$$

$$V_{ego} = V_{fianl} + \int_0^t a(t)\,dt = V_{fianl} + a_{final}t + \frac{1}{2}kt^2 \qquad (2)$$

$$D_{ego} = D_{fianl} + D_{stop} + \int_0^t V(t)dt = D_{fianl} + D_{stop} + V_{fianl}t + \frac{1}{2}a_{final}t^2 + \frac{1}{6}kt^3$$

Since

$$D_{brake} = D_{ego} - D_{stop} - D_{final}$$

$$D_{brake} = V_{fianl}t + \frac{1}{2}a_{final}t^2 + \frac{1}{6}kt^3 \qquad (3)$$

on the basic of equation (1), an equation is given by:

$$kt = a_{desire2} - a_{final} \qquad (4)$$

Equation (4) is put into equation (2), to obtain an equation given by:

$$V_{ego} = V_{fianl} + a_{final}t + \frac{1}{2}(a_{desire2} - a_{final})\,t$$

$$t = \frac{2(V_{ego} - V_{fianl})}{a_{desire2} + a_{final}} \qquad (5)$$

Equation (4) is put into equation (3), to obtain an equation given by:

$$D_{brake} = V_{fianl}t + \frac{1}{2}a_{final}t^2 + \frac{1}{6}(a_{desire2} - a_{final})t^2 = V_{fianl}t + \frac{1}{6}(a_{desire2} + 2a_{final})t^2$$

$$(6)$$

Equation (5) is put into (6), to obtain an equation given by:

$$D_{brake} = V_{fianl} \cdot \frac{2(V_{ego} - V_{fianl})}{a_{desire2} + a_{final}} + \frac{1}{6}(a_{desire2} + 2a_{final}) \cdot \left[\frac{2(V_{ego} - V_{fianl})}{a_{desire2} + a_{final}}\right]^2$$

Assumed that $\overline{a}$ = $a_{desire2}$ + $a_{final}$, $\Delta V$ = - ($V_{ego}$ - $V_{fianl}$), an equation is given by:

$$3D_{brake}\overline{a}^2 - 2(3V_{fianl} + \Delta V)\Delta V \cdot \overline{a} + 2a_{final}\Delta V^2 = 0$$

$$\overline{a} = \frac{-2(3V_{fianl}+\Delta V)\Delta V \mp \sqrt{4(3V_{fianl}+\Delta V)^2 \Delta V^2 - 4 \times 3D_{brake} \times 2a_{final}\Delta V^2}}{2 \times 3D_{brake}} \qquad (7)$$

Since $\overline{a} < 0$, a minus sign is taken at a plus and minus sign in an equation (7), to obtain an equation given by:

$$\overline{a} = \frac{-\Delta V\left(3V_{fianl} + \Delta V + \sqrt{(3V_{fianl} + \Delta V)^2 - 6D_{brake}a_{final}}\right)}{3D_{brake}}$$

Therefore, alternatively, an equation is set by:

$$a_{desire2} = \overline{a} - a_{final} = -a_{final} - \frac{\Delta V\left(3V_{fianl} + \Delta V + \sqrt{(3V_{fianl} + \Delta V)^2 - 6D_{brake}a_{final}}\right)}{3D_{brake}}$$

Therefore, alternatively, S1111 specifically may be: determining the second acceleration $a_{desire2}$ based on the velocity of the vehicle, the distance between the vehicle and the front vehicle, and an equation:

$$a_{desire2} = -a_{final} - \frac{\Delta V}{3D_{brake}}\left(3V_{fianl} + \Delta V + \sqrt{(3V_{fianl} + \Delta V)^2 - 6D_{brake}a_{final}}\right)$$

where,

$$D_{brake} = D_{ego} - D_{stop} - D_{final}$$

$$\Delta V = V_{ego} - V_{fianl}$$

$a_{final}$ is the first preset value, $V_{ego}$ is the velocity of the vehicle, $V_{fianl}$ is the second preset value, $D_{ego}$ is the distance between the vehicle and the front vehicle, $D_{stop}$ is a desired stop-and-go distance, and $D_{final}$ is a distance to be traveled by the vehicle in the second deceleration stage. In this way, a calculation method is simple and a calculation amount is small, which is convenient to be applied to a low-cost vehicle controller.

Further, the first acceleration is determined based on the second acceleration and the preset acceleration value range, and specifically a first acceleration $a_{desire1}$ is determined based on the second acceleration and an equation:

$$a_{desire1} = \max(a_{min}, \min(a_{max}, a_{desire2}))$$

where, $a_{max}$ is a maximum acceleration limit value, and $a_{min}$ is a minimum acceleration limit value.
Alternatively, $a_{min}$ is determined based on an equation:

$$a_{min} = \frac{V_{fianl}^2 - \dot{V}_{ego}^2}{2D_{brake}} - A$$

where, A is a constant; and
$a_{max}$ is less than or equal to a first preset acceleration.

The above technical solution is essentially that: an acquisition interval is set, and illustratively, the velocity of the vehicle and the distance between the vehicle and the front vehicle are acquired once every other 1 minute, and acquisition time points are respectively t1, t2, t3, ..., and so on. A second acceleration at the t1 time point and a preset acceleration value range at the t1 time point are determined based on the velocity of the vehicle and the distance between the vehicle and the front vehicle both acquired at the t1 time point. A first acceleration at the t1 time point is determined based on the second acceleration at the t1 time point and the preset acceleration value range at the t1 time point, and the vehicle is controlled to travel based on the first acceleration determined at the t1 time point until a t2 time point is reached. A second acceleration at the t2 time point and a preset acceleration value range at the t2 time point are determined based on the velocity of the vehicle and the distance between the vehicle and the front vehicle both acquired at the t2 time point. A first acceleration at the t2 time point is determined based on the second acceleration at the t2 time point and the preset acceleration value range at the t2 time point, and the vehicle is controlled to travel based on the first acceleration determined at the t2 time point until a t3 time point is reached. A second acceleration at the t3 time point and a preset acceleration value range at the t3 time point are determined based on the velocity of the vehicle and the distance between the vehicle and the front vehicle both acquired at the t3 time point. A first acceleration at the t3 time point is determined based on the second acceleration at the t3 time point and the preset acceleration value range at the t3 time point, and the vehicle is controlled to travel based on the first acceleration determined at the t3 time point, until a t4 time point is reached, and so on.
In the above technical solution, the second acceleration and the preset acceleration value range are dynamically and cyclically determined based on the velocity of the vehicle and the distance between the vehicle and the front vehicle, and the second acceleration is corrected based on the preset acceleration value range to obtain the first acceleration. In this way, in an entire first deceleration stage, the acceleration and the velocity of the vehicle are within a controllable range, to ensure that, at the end time point of the first deceleration stage, the first acceleration of the vehicle is equal to the first preset value, and the velocity of the vehicle is equal to the second preset value, and thus smooth and comfortable braking and precise control of the parking distance both may be promoted to achieve.
On the basis of the above technical solution, alternatively, the vehicle performs the method for controlling stop and go of the vehicle provided in the above technical solution in response to satisfying at least one of the velocity of the vehicle being less than a third preset value, and the distance between the vehicle and the front vehicle being greater than a fourth preset value. Specific values of the third preset value and the fourth preset value are not limited in the disclosure. In practice, the specific values of the third preset value and the fourth preset value may be determined based on specific values of the first preset value and the second preset value. Those skilled in the art may understand that the technical solution provided in embodiments of the present disclosure may be not performed under all conditions. For example, when the distance between the vehicle and the front vehicle is less than $D_{stop}$, obviously, the above technical method is not applicable, forcibly adopting the technical solution provided in embodiments of the present disclosure may cause the vehicle to collide with the front vehicle. Therefore, the vehicle performs the method for controlling stop and go of the vehicle provided in the technical solution in response to satisfying at least one of the velocity of the vehicle being less than the third preset value, and the distance between the vehicle and the front vehicle being greater than the fourth preset value, which essentially sets a trigger condition and adopts the technical solution provided in embodiments of the present disclosure when the trigger condition is satisfied. Such configuration may further ensure precise control of the parking distance.

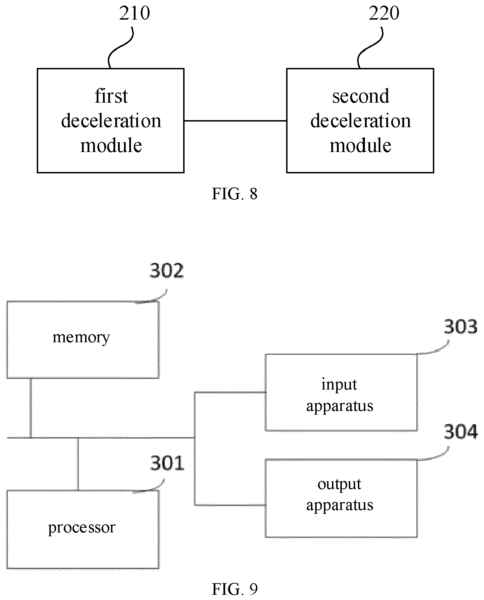

FIG. 8 is a schematic diagram illustrating a structure of an apparatus for controlling stop and go of a vehicle provided in an embodiment of the present disclosure. As illustrated in FIG. 8, the apparatus includes a first deceleration module 210 and a second deceleration module 220.

The first deceleration module 210 is configured to, in a first deceleration stage, control a vehicle to decelerate based on a first acceleration, with an absolute value of the first acceleration gradually decreasing, and a change rate of the first acceleration being less than a preset change rate threshold value, until the first acceleration of the vehicle decreases to a first preset value, and a velocity of the vehicle is equal to a second preset value.

The second deceleration module 220 is configured to, in a second deceleration stage, control the vehicle to decelerate based on a second acceleration, until the vehicle stops, in which, the second acceleration is equal to the first preset value.

Referring to FIG. 2 and FIG. 3, in the foregoing technical solution, an entire deceleration process is substantially divided into two stages, i.e., a first deceleration stage A and a second deceleration stage B.

In the first deceleration stage A, it is required to control the vehicle to perform a deceleration motion with variable acceleration. Specifically, in the first deceleration stage A, it is required to control an absolute value of an acceleration of the vehicle to gradually decrease, and the velocity of the vehicle to gradually decrease, until reaching an E point. The E point is an end time point of the first deceleration stage A, and is a beginning time point of the second deceleration stage B. At the E point, it is required to control the acceleration of the vehicle to be the first preset value, and the velocity to be second preset value. And in the entire first deceleration stage A, the change rate of the first acceleration is less than the preset change rate threshold value. A specific value of the change rate threshold value is not limited in the disclosure. When actually setting the change rate threshold value, it is required to consider whether a set change rate threshold value may ensure that the acceleration transitions smoothly without abrupt change throughout the entire deceleration process of the vehicle in the first stage, satisfying a comfort requirement in a deceleration process.

In the second deceleration stage B, it is required to control the vehicle to perform a uniformly deceleration motion. Specifically, in the second deceleration stage B, it is required to control the absolute value of the acceleration of the vehicle to be constant, and equal to the first preset value. it is required to control the velocity of the vehicle to gradually decrease until reaching 0.

In the above technical solution, in the entire first deceleration stage A, the change rate of the first acceleration is less than the preset change rate threshold value. And in the second deceleration stage B, deceleration is performed based on the acceleration value at the end time point of the first deceleration stage A. There is no abrupt change of acceleration during two deceleration stages and at a junction of two deceleration stages, which may improve comfort in a stop-and-go process.

Continuing referring to FIG. 2, in practice, in order to ensure safety of the vehicle, it is required to determine a desired stop-and-go distance $D_{stop}$. The desired stop-and-go distance $D_{stop}$ refers to a distance between the vehicle and the front vehicle when the vehicle completely stops, that is, a distance between an end point F in the second deceleration stage B and the front vehicle. Precise control of a parking distance requires the desired stop-and-go distance $D_{stop}$ to be a fixed value.

In the second deceleration stage B, since it is required to control the vehicle to perform the uniformly deceleration motion, and an initial acceleration (that is, a first preset value) and an initial velocity (that is, a second preset value) of the vehicle are fixed values, a distance to be traveled by the vehicle in the second deceleration stage B is a fixed value.

Therefore, the problem of precise control of the parking distance may be transformed that it required to ensure that, at the end time point of the first deceleration stage, the second acceleration of the vehicle is equal to the first preset value, and the velocity of the vehicle is equal to a second preset value.

Since one purpose of vehicle control in the first deceleration stage is that, at the end time point of the first deceleration stage A, the second acceleration of the vehicle is equal to the first preset value, and the velocity of the vehicle is equal to a second preset value. Therefore, the technical solution provided in embodiments of the present disclosure may achieve precise control of the parking distance.

In summary, the above technical solution may achieve smooth and comfortable braking and precise control of the parking distance.

Optionally, on the basis of the above technical solution, the first deceleration module 210 includes a data acquiring unit, a first acceleration determining unit and a first control unit.

The data acquiring unit is configured to acquire the velocity of the vehicle and a distance between the vehicle and a front vehicle at a preset time interval.

There are a plurality of methods for acquiring the velocity of the vehicle. For example, a velocity of the vehicle displayed in a vehicle instrument panel may be directly used as the velocity of the vehicle. Alternatively, a rotating speed of a vehicle tire is acquired, and the velocity of the vehicle is determined based on the rotating speed of the vehicle tire and a diameter of the tire.

There are a plurality of methods for acquiring the distance between the vehicle and the front vehicle. For example, the distance between the vehicle and the front vehicle may be acquired by means of at least one of a laser range finder, an ultrasonic range finder, a microwave radar, an infrared range finder, and a visual range finder mounted on the vehicle.

The first acceleration determining unit is configured to determine the first acceleration based on the velocity of the vehicle and the distance between the vehicle and the front vehicle.

Illustratively, a corresponding relationship between the velocity of the vehicle, the distance between the vehicle and the front vehicle and the first acceleration may be pre-established, and the first acceleration determining unit is specifically configured to determine the first acceleration based on the velocity of the vehicle, the distance between the vehicle and the front vehicle and the corresponding relationship.

The corresponding relationship between the velocity of the vehicle, the distance between the vehicle and the front vehicle and the first acceleration may be presented in the form of a corresponding relationship table, or may be presented in a function equation.

For example, when the corresponding relationship between the velocity of the vehicle, the distance between the vehicle and the front vehicle and the first acceleration is presented in a function equation. The function equation may be obtained by multiple tests in combination with data fitting, or may be determined based on a kinematics principle. For example, the function equation may be determined based on the variable accelerated motion law with the acceleration change rate as the fixed value. In this case, the step may be replaced with: determining the first acceleration based on the velocity of the vehicle, the distance between the vehicle and the front vehicle, and the variable accelerated motion law with the acceleration change rate as the fixed value.

The first control unit is configured to control the vehicle.

The foregoing technical solution is essentially setting an acquisition interval. Illustratively, the velocity of the vehicle and the distance between the vehicle and the front vehicle are respectively acquired once every other 1 minute, for example, acquisition time points are respectively t1, t2, t3, ..., and so on. A first acceleration at a t1 time point is determined based on the velocity of the vehicle and the distance between the vehicle and the front vehicle both acquired at the t1 time point, and the vehicle is controlled to travel based on the first acceleration determined at the t1 time point, until a t2 time point is reached. A first acceleration at the t2 time point is determined based on the velocity of the vehicle and the distance between the vehicle and the front vehicle both acquired at the t2 time point, and the vehicle is controlled to travel based on the first acceleration determined at the t2 time point, until a t3 time point is reached. A first acceleration at the t3 time point is determined based on the velocity of the vehicle and the distance between the vehicle and the front vehicle both acquired at the t3 time point, and the vehicle is controlled to travel based on the first acceleration determined at the t3 time point, until a t4 time point is reached, and so on.

In the above technical solution, the first acceleration may be dynamically and cyclically adjusted based on the velocity of the vehicle and the distance between the vehicle and the front vehicle. In this way, in an entire first deceleration stage, the acceleration and the velocity of the vehicle are within a controllable range, to ensure that, at the end time point of the first deceleration stage, the first acceleration of the vehicle is equal to the first preset value and the velocity of the vehicle is equal to the second preset value, and thus smooth and comfortable braking and precise control of the parking distance both may be promoted to achieve.

Optionally, the first acceleration determining unit includes a second acceleration determining subunit and a first acceleration determining subunit; the second acceleration determining subunit is configured to determine a second acceleration based on the velocity of the vehicle and the distance between the vehicle and the front vehicle; and the first acceleration determining subunit is configured to determine the first acceleration based on the second acceleration and a preset acceleration value range.

The configuration is essentially correcting the second acceleration by using the preset acceleration value range to form the first acceleration. Those skilled in the art may understand that there may a plurality of possible motion states before the vehicle enters the first deceleration stage. For example, the vehicle may be in a uniform rectilinear motion state, in which case, an acceleration is 0. And the absolute value of the acceleration of the vehicle gradually decreases at the first deceleration stage, the acceleration of the vehicle maintains unchanged at the second deceleration stage. In an entire vehicle stop-and-go process, an acceleration at a beginning time point of the first deceleration stage is maximum. In a case that the vehicle directly enters the first deceleration stage from the uniform rectilinear motion state, the acceleration of the vehicle may change abruptly at a time point of entering the first deceleration stage, so that so that the vehicle has worse comfort. The first acceleration is determined by setting the second acceleration and the preset acceleration value range, which essentially corrects the obtained second acceleration by using the preset acceleration value range, reduces a variation in accelerations of the vehicle before and after the initial time point of the first deceleration stage, and further improves the comfort in a vehicle braking process, and achieves smooth and comfortable braking in a whole process.

Optionally, the second acceleration determining subunit is specifically configured to:
determine a second acceleration based on the velocity of the vehicle, the distance between the vehicle and the front vehicle and a variable accelerated motion law with an acceleration change rate as a fixed value.

Referring to FIGs. 2, 6 and 7, assuming that a time parameter corresponding to a certain time point in the first deceleration stage is 0, the first deceleration stage ends and the second deceleration stage starts at a t time point. Assuming that $a_{final}$ is the first preset value, $V_{ego}$ is the velocity of the vehicle, $V_{fianl}$ is the second preset value, $D_{ego}$ is the distance between the vehicle and the front vehicle, $D_{stop}$ is a desired stop-and-go distance, and $D_{final}$ is a distance to be traveled by the vehicle in the second deceleration stage, $a_{desire2}$ is a second acceleration, and $k$ is a change rate of the first acceleration.

Since the first acceleration variable is a fixed value, referring to FIG. 6, equations are given by:

$$a_{desire2} = a_{final} + kt \qquad (1)$$

$$V_{ego} = V_{fianl} + \int_0^t a\ (t)\ dt = V_{fianl} + a_{final}t + \frac{1}{2}kt^2 \qquad (2)$$

$$D_{ego} = D_{fianl} + D_{stop} + \int_0^t V(t)dt = D_{fianl} + D_{stop} + V_{fianl}t + \frac{1}{2}a_{final}t^2 + \frac{1}{6}kt^3$$

Since

$$D_{brake} = D_{ego} - D_{stop} - D_{final}$$

$$D_{brake} = V_{fianl}t + \frac{1}{2}a_{final}t^2 + \frac{1}{6}kt^3 \qquad (3)$$

on the basic of equation (1), an equation is given by:

$$kt = a_{desire2} - a_{final} \qquad (4)$$

Equation (4) is put into equation (2), to obtain an equation given by:

$$V_{ego} = V_{fianl} + a_{final}t + \frac{1}{2}\ (a_{desire2} - a_{final})\ t$$

$$t = \frac{2\ (V_{ego} - V_{fianl})}{a_{desire2} + a_{final}} \qquad (5)$$

Equation (4) is put into equation (3), to obtain an equation given by:

$$D_{brake} = V_{fianl}t + \frac{1}{2}a_{final}t^2 + \frac{1}{6}(a_{desire2} - a_{final})t^2 = V_{fianl}t + \frac{1}{6}(a_{desire2} + 2a_{final})t^2$$

$$(6)$$

Equation (5) is put into (6), to obtain an equation given by:

$$D_{brake} = V_{fianl} \cdot \frac{2(V_{ego} - V_{fianl})}{a_{desire2} + a_{final}} + \frac{1}{6}(a_{desire2} + 2a_{final}) \cdot \left[\frac{2(V_{ego} - V_{fianl})}{a_{desire2} + a_{final}}\right]^2$$

Assumed that $\overline{\alpha} = a_{desire2} + a_{final}$, $\Delta V = -\ (V_{ego} - V_{fianl})$ , an equation is given by:

$$3D_{brake}\bar{a}^2 - 2(3V_{fianl} + \Delta V)\Delta V \cdot \bar{a} + 2a_{final}\Delta V^2 = 0$$

$$\bar{a} = \frac{-2(3V_{fianl}+\Delta V)\Delta V \mp \sqrt{4(3V_{fianl}+\Delta V)^2 \Delta V^2 - 4 \times 3D_{brake} \times 2a_{final}\Delta V^2}}{2 \times 3D_{brake}} \qquad (7)$$

Since $\bar{a}$ <0, a minus sign is taken at a plus and minus sign in an equation (7), to obtain an equation given by:

$$\bar{a} = \frac{-\Delta V\left(3V_{fianl} + \Delta V + \sqrt{(3V_{fianl} + \Delta V)^2 - 6D_{brake}a_{final}}\right)}{3D_{brake}}$$

Therefore, alternatively, an equation is set by:

$$a_{desire2} = \bar{a} - a_{final} = -a_{final} - \frac{\Delta V\left(3V_{fianl} + \Delta V + \sqrt{(3V_{fianl} + \Delta V)^2 - 6D_{brake}a_{final}}\right)}{3D_{brake}}$$

Based on this, optionally, the second acceleration determining subunit is specifically configured to:

determine the second acceleration $a_{desire2}$ based on the velocity of the vehicle, the distance between the vehicle and the front vehicle, and an equation:

$$a_{desire2} = -a_{final} - \frac{\Delta V}{3D_{brake}}\left(3V_{fianl} + \Delta V + \sqrt{(3V_{fianl} + \Delta V)^2 - 6D_{brake}a_{final}}\right)$$

where,

$$D_{brake} = D_{ego} - D_{stop} - D_{final}$$

$$\Delta V = V_{ego} - V_{fianl}$$

$a_{final}$ is the first preset value, $V_{ego}$ is the velocity of the vehicle, $V_{fianl}$ is the second preset value, $D_{ego}$ is the distance between the vehicle and the front vehicle, $D_{stop}$ is a desired stop-and-go distance, and $D_{final}$ is a distance to be traveled by the vehicle in the second deceleration stage. In this way, a calculation method is simple and a calculation amount is small, which is convenient to be applied to a low-cost vehicle controller.

Further, the first acceleration determining subunit is specifically configured to:

determine the first acceleration $a_{desire1}$ based on the second acceleration and an equation:

$$a_{desire1} = \max(a_{min}, \min(a_{max}, a_{desire2}))$$

where, $a_{max}$ is a maximum acceleration limit value, and $a_{min}$ is a minimum acceleration limit value.

Alternatively, $a_{min}$ is determined based on an equation:

$$a_{min} = \frac{V_{fianl}^2 - \bar{V}_{ego}^2}{2D_{brake}} - A$$

where, A is a constant; and
$a_{max}$ is less than or equal to a first preset acceleration.

The above technical solution is essentially that: an acquisition interval is set, and illustratively, the velocity of the vehicle and the distance between the vehicle and the front vehicle are acquired once every other 1 minute, and acquisition time points are respectively t1, t2, t3, ..., and so on. A second acceleration at the t1 time point and a preset acceleration value range at the t1 time point are determined based on the velocity of the vehicle and the distance between the vehicle and the front vehicle both acquired at the t1 time point. A first acceleration at the t1 time point is determined based on the second acceleration at the t1 time point and the preset acceleration value range at the t1 time point, and the vehicle is controlled to travel based on the first acceleration determined at the t1 time point until a t2 time point is reached. A second acceleration at the t2 time point and a preset acceleration value range at the t2 time point are determined based on the velocity of the vehicle and the distance between the vehicle and the front vehicle both acquired at the t2 time point. A first acceleration at the t2 time point is determined based on the second acceleration at the t2 time point and the preset acceleration value range at the t2 time point, and the vehicle is controlled to travel based on the first acceleration determined at the t2 time point until a t3 time point is reached. A second acceleration at the t3 time point and a preset acceleration value range at the t3 time point are determined based on the velocity of the vehicle and the distance between the vehicle and the front vehicle both acquired at the t3 time point. A first acceleration at the t3 time point is determined based on the second acceleration at the t3 time point and the preset acceleration value range at the t3 time point, and the vehicle is controlled to travel based on the first acceleration determined at the t3 time point, until a t4 time point is reached, and so on.

In the above technical solution, the second acceleration and the preset acceleration value range are dynamically and cyclically determined based on the velocity of the vehicle and the distance between the vehicle and the front vehicle, and the second acceleration is corrected based on the preset acceleration value range to obtain the first acceleration. In this way, in an entire first deceleration stage, the acceleration and the velocity of the vehicle are within a controllable range, to ensure that, at the end time point of the first deceleration stage, the first acceleration of the vehicle is equal to the first preset value, and the velocity of the vehicle is equal to the second preset value, and thus smooth and comfortable braking and precise control of the parking distance both may be promoted to achieve.

On the basis of the above technical solution, optionally, the apparatus for controlling stop and go of the vehicle operates to control stop and go of the vehicle in response to satisfying at least one of the velocity of the vehicle being less than a third preset value, and the distance between the vehicle and the front vehicle being greater than a fourth preset value. Specific values of the third preset value and the fourth preset value are not limited in the disclosure. In practice, the specific values of the third preset value and the fourth preset value may be determined based on the specific values of the first preset value and the second preset value. Those skilled in the art may understand that the technical solution provided in embodiments of the present disclosure may be not performed under all conditions. For example, when the distance between the vehicle and the front vehicle is less than $D_{stop}$, obviously, the above technical method is not applicable, forcibly adopting the technical solution provided in embodiments of the present disclosure may cause the vehicle to collide with the front vehicle. Therefore, the vehicle performs the method for controlling stop and go of the vehicle provided in the technical solution in response to satisfying at least one of the velocity of the vehicle being less than the third preset value, and the distance between the vehicle and the front vehicle being greater than the fourth preset value, which essentially sets a trigger condition and adopts the technical solution provided in embodiments of the present disclosure when the trigger condition is satisfied. Such configuration may further ensure precise control of the parking distance.

The apparatus disclosed in the above embodiments may implement the method disclosed in the above each method embodiment, and have the same or corresponding beneficial effect. To avoid repetition, it will not be repeated here.

FIG. 9 is a diagram illustrating a structure of a hardware of a vehicle provided in the embodiment of the present disclosure. As illustrated in FIG. 9, the vehicle includes:

one or more processors 301, in which FIG. 9 takes one processor 301 for an example;
a memory 302; and
an input apparatus 303 and an output apparatus 304.

The processor 301, the memory 302, the input apparatus 303 and the output apparatus 304 in the vehicle may be connected via a bus or in other ways. FIG. 9 takes connection via a bus for an example.

As a non-transitory computer-readable storage medium, the memory 302 may be configured to store software programs, non-transitory computer-executable programs and modules, such as program instructions/modules corresponding to a method for controlling stop and go of a vehicle in the embodiment of the present disclosure. The processor 301 executes various functional applications and data processings of the server by running a non-transitory software program, an instruction, and a module stored in the memory 302, that is, a method for controlling stop and go of a vehicle in the above method embodiment is implemented.

The method 302 may include a program storage area and a data storage area; the program storage area may store operation systems and application programs required by at least one function; the data storage area may store data created based on the use of a vehicle. In addition, the memory 302 may include a high-speed random access memory, and may also include a non-transitory memory, such as at least one magnetic disk storage device, a flash memory device, or other non-transitory solid-state storage devices. In some embodiments, the memory 302 optionally includes a memory set remotely relative to the processor 301 that may be connected to a terminal device via a network. The example of the above networks includes but not limited to an Internet, an enterprise intranet, a local area network, a mobile communication network and their combination.

The input apparatus 303 may receive input digital or character information, and generate user configuration of a vehicle and a key signal input related to function control. The output apparatus 304 may include a display device such as a display screen.

It should be noted that relational terms such as "first" and "second" are used herein to distinguish one entity or operation from another entity or operation without necessarily requiring or implying any such actual relationship or order between such entities or operations. And, the terms "comprise", "comprising" or any other variations thereof, are intended to cover a non-exclusive inclusion, such that a process, a method, an article or a device including a series of elements not only includes those elements but also includes other elements not expressly listed, or may further include elements inherent to such process, method, article, or device. In the absence of more constraints, the elements defined by a sentence "comprising one" do not preclude the presence of additional same elements in the process, method, article, or apparatus that includes the elements.

The foregoing is merely a specific embodiment of the present disclosure, so that those skilled in the art may understand or implement the present disclosure. Various modifications to the embodiments will be apparent to those skilled in the art, and general principles defined herein may be implemented in other embodiments without departing from the spirit or scope of the disclosure. Therefore, the present disclosure may not be limited to the embodiments described herein, but conform to the widest scope consistent with principles and novel features disclosed herein.

**Claims**

1. A method for controlling stop and go of a vehicle, comprising:

   in a first deceleration stage, controlling a vehicle to decelerate based on a first acceleration with an absolute value of the first acceleration gradually decreasing, and a change rate of the first acceleration being less than a preset change rate threshold value, until the first acceleration of the vehicle decreases to a first preset value, and a velocity of the vehicle is equal to a second preset value; and
   in a second deceleration stage, controlling the vehicle to decelerate based on a second acceleration, until the vehicle stops, wherein the second acceleration is equal to the first preset value.

2. The method of claim 1, wherein in the first deceleration stage, controlling the vehicle to decelerate based on the first acceleration comprises:

   acquiring the velocity of the vehicle and a distance between the vehicle and a front vehicle at a preset time interval;
   determining the first acceleration based on the velocity of the vehicle and the distance between the vehicle and the front vehicle; and
   controlling the vehicle to travel based on the first acceleration.

3. The method of claim 2, wherein determining the first acceleration based on the velocity of the vehicle and the distance between the vehicle and the front vehicle comprises:

   determining a second acceleration based on the velocity of the vehicle and the distance between the vehicle and the front vehicle; and
   determining the first acceleration based on the second acceleration and a preset acceleration value range.

4. The method of claim 3, wherein determining the second acceleration based on the velocity of the vehicle and the distance between the vehicle and the front vehicle comprises:
determining the second acceleration based on the velocity of the vehicle, the distance between the vehicle and the front vehicle, and a variable accelerated motion law with an acceleration change rate as a fixed value.

5. The method of claim 4, wherein determining the second acceleration based on the velocity of the vehicle, the distance between the vehicle and the front vehicle and the variable accelerated motion law with the acceleration change rate as the fixed value comprises:

determining the second acceleration $a_{desire2}$ based on the velocity of the vehicle, the distance between the vehicle and the front vehicle and an equation

$$a_{desire2} = -a_{final} - \frac{\Delta V}{3D_{brake}} \left( 3V_{fianl} + \Delta V + \sqrt{\left(3V_{fianl} + \Delta V\right)^2 - 6D_{brake}a_{final}} \right)$$

where,

$$D_{brake} = D_{ego} - D_{stop} - D_{final}$$

$$\Delta V = V_{ego} - V_{fianl}$$

$a_{final}$ is the first preset value, $V_{ego}$ is the velocity of the vehicle, $V_{fianl}$ is the second preset value, $D_{ego}$ is the distance between the vehicle and the front vehicle, $D_{stop}$ is a desired stop-and-go distance, and $D_{final}$ is a distance to be traveled by the vehicle in the second deceleration stage.

6. The method of claim 5, wherein determining the first acceleration based on the second acceleration and the preset acceleration value range comprises:

determining the first acceleration $a_{desire1}$ based on the second acceleration and an equation

$$a_{desire1} = \max(a_{min}, \min(a_{max}, a_{desire2}))$$

where, $a_{max}$ is a maximum acceleration limit value, and $a_{min}$ is a minimum acceleration limit value.

7. The method of claim 6, wherein $a_{min}$ is determined based on an equation

$$a_{min} = \frac{V_{fianl}^2 - V_{ego}^2}{2D_{brake}} - A$$

where, A is a constant; and
$a_{max}$ is less than or equal to a first preset acceleration.

8. The method of claim 1, wherein, the vehicle performs the method for controlling stop and go of the vehicle in response to satisfying at least one of
the velocity of the vehicle being less than a third preset value, and the distance between the vehicle and the front vehicle being greater than a fourth preset value.

9. An apparatus for controlling stop and go of a vehicle, comprising:

a first deceleration module, configured to, in a first deceleration stage, control a vehicle to decelerate based on a first acceleration with an absolute value of the first acceleration gradually decreasing, and a change rate of the first acceleration being less than a preset change rate threshold value, until the first acceleration of the vehicle decreases to a first preset value, and a velocity of the vehicle is equal to a second preset value; and

a second deceleration module, configured to, in a second deceleration stage, control the vehicle to decelerate based on a second acceleration, until the vehicle stops, wherein the second acceleration is equal to the first preset value.

10. The apparatus of claim 9, wherein the first deceleration module comprises a data acquiring unit, a first acceleration determining unit and a first control unit;

the data acquiring unit is configured to acquire the velocity of the vehicle and a distance between the vehicle and a front vehicle at a preset time interval;
the first acceleration determining unit is configured to determine the first acceleration based on the velocity of the vehicle and the distance between the vehicle and the front vehicle; and
the first control unit is configured to control the vehicle to travel based on the first acceleration.

11. The apparatus of claim 10, wherein the first acceleration determining unit comprises a second acceleration determining subunit and a first acceleration determining subunit;

the second acceleration determining subunit is configured to determine a second acceleration based on the velocity of the vehicle and the distance between the vehicle and the front vehicle; and
the first acceleration determining subunit is configured to determine the first acceleration based on the second acceleration and a preset acceleration value range.

12. The apparatus of claim 11, wherein the second acceleration determining subunit is specifically configured to: determine the second acceleration based on the velocity of the vehicle, the distance between the vehicle and the front vehicle and a variable accelerated motion law with an acceleration change rate as a fixed value.

13. The apparatus of claim 12, wherein the second acceleration determining subunit is specifically configured to:

determine the second acceleration $a_{desire2}$ based on the velocity of the vehicle, the distance between the vehicle and the front vehicle and an equation

$$a_{desire2} = -a_{final} - \frac{\Delta V}{3D_{brake}} \left( 3V_{fianl} + \Delta V + \sqrt{\left(3V_{fianl} + \Delta V\right)^2 - 6D_{brake}a_{final}} \right)$$

where,

$$D_{brake} = D_{ego} - D_{stop} - D_{final}$$

$$\Delta V = V_{ego} - V_{fianl}$$

$a_{final}$ is the first preset value, $V_{ego}$ is the velocity of the vehicle, $V_{fianl}$ is the second preset value, $D_{ego}$ is the distance between the vehicle and the front vehicle, $D_{stop}$ is a desired stop-and-go distance, and $D_{final}$ is a distance to be traveled by the vehicle in the second deceleration stage.

14. The apparatus of claim 13, wherein, the first acceleration determining subunit is specifically configured to:

determine the first acceleration $a_{desire1}$ based on the second acceleration and an equation

$$a_{desire1} = \max(a_{min}, \min(a_{max}, a_{desire2}))$$

where, $a_{max}$ is a maximum acceleration limit value, and $a_{min}$ is a minimum acceleration limit value.

15. A vehicle, comprising a processor and a memory;
wherein, the processor is configured to perform steps of the method according to any one of claims 1 to 8 by calling a program or an instruction stored in the memory.

in a first deceleration stage, controlling a vehicle to decelerate based on a first acceleration with an absolute value of the first acceleration gradually decreasing, and a change rate of the first acceleration being less than a preset change rate threshold value, until the first acceleration of the vehicle decreases to a first preset value, and a velocity of the vehicle is equal to a second preset value — S110

in a second deceleration stage, controlling the vehicle to decelerate based on a second acceleration, until the vehicle stops, wherein the second acceleration is equal to the first preset value — S120

FIG. 1

| vehicle to be controlled | first deceleration stage A | second deceleration stage B | | front vehicle |

$D_{brake}$   E   $D_{fianl}$   F   $D_{stop}$

$D_{ego}$

FIG. 2

A   E   B   F

0   t

M1

M2

a

FIG. 3

acquiring the velocity of the vehicle and a distance between the vehicle and a front vehicle at a preset time interval — S111

determining the first acceleration based on the velocity of the vehicle and the distance between vehicle and the front vehicle — S112

controlling the vehicle to travel based on a first acceleration — S113

FIG. 4

determining a second acceleration based on the velocity of the vehicle and the distance between the vehicle and the front vehicle — S111

determining the first acceleration based on the second acceleration and a preset acceleration value range — S112

FIG. 5

a

$a_{final}$

$a_{desire2}$

t

T

FIG. 6

V

$V_{ego}$

$V_{fianl}$

T

t

FIG. 7

210

220

first
deceleration
module

second
deceleration
module

FIG. 8

302

memory

303

input
apparatus

304

301

processor

output
apparatus

FIG. 9

# EP 4 282 724 A1

## INTERNATIONAL SEARCH REPORT

International application No.

**PCT/CN2021/123653**

### A. CLASSIFICATION OF SUBJECT MATTER

B60W 30/16(2020.01)i

According to International Patent Classification (IPC) or to both national classification and IPC

### B. FIELDS SEARCHED

Minimum documentation searched (classification system followed by classification symbols)

B60W

Documentation searched other than minimum documentation to the extent that such documents are included in the fields searched

Electronic data base consulted during the international search (name of data base and, where practicable, search terms used)

CNKI, CNABS, SIPOABS, DWPI: 车辆, 汽车, 跟停, 刹车, 匀速, 加速度, vehicle, car, brake, uniform, speed, acceleration

### C. DOCUMENTS CONSIDERED TO BE RELEVANT

| Category* | Citation of document, with indication, where appropriate, of the relevant passages | Relevant to claim No. |
|---|---|---|
| PX | CN 112874521 A (BEIJING LUOKEWEIERSI TECHNOLOGY CO., LTD.) 01 June 2021 (2021-06-01) <br> description, pages 3-10 | 1-15 |
| X | CN 104379427 A (HITACHI AUTOMOTIVE SYSTEMS, LTD.) 25 February 2015 (2015-02-25) <br> claims 1-8, description pages 3-10 | 1-15 |
| A | CN 109435949 A (ANHUI JIANGHUAI AUTOMOBILE GROUP CORP., LTD.) 08 March 2019 (2019-03-08) <br> entire document | 1-15 |
| A | US 20200310452 A1 (FUJH SUBARU CORP.) 01 October 2020 (2020-10-01) <br> entire document | 1-15 |
| A | US 2020348667 A1 (MAGNA ELECTRONICS INC.) 05 November 2020 (2020-11-05) <br> entire document | 1-15 |

☐ Further documents are listed in the continuation of Box C.　　☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **26 November 2021** | **22 December 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/123653**

| Patent document cited in search report | | | Publication date (day/month/year) | Patent family member(s) | | | Publication date (day/month/year) |
|---|---|---|---|---|---|---|---|
| CN | 112874521 | A | 01 June 2021 | None | | | |
| CN | 104379427 | A | 25 February 2015 | WO | 2013187227 | A1 | 19 December 2013 |
| | | | | DE | 112013002882 | T5 | 12 March 2015 |
| | | | | JP | 2013256149 | A | 26 December 2013 |
| | | | | DE | 112013002882 | B4 | 28 September 2017 |
| | | | | US | 9399449 | B2 | 26 July 2016 |
| | | | | CN | 104379427 | B | 22 February 2017 |
| | | | | JP | 5927054 | B2 | 25 May 2016 |
| | | | | US | 2015166025 | A1 | 18 June 2015 |
| CN | 109435949 | A | 08 March 2019 | None | | | |
| US | 20200310452 | A1 | 01 October 2020 | None | | | |
| US | 2020348667 | A1 | 05 November 2020 | US | 2017329331 | A1 | 16 November 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202110088615